(19) Europäisches Patentamt
European Patent Office
Office européen des brevets

(11) EP 3 192 814 A1

(12) EUROPEAN PATENT APPLICATION
published in accordance with Art. 153(4) EPC

(43) Date of publication:
**19.07.2017 Bulletin 2017/29**

(21) Application number: **15818724.5**

(22) Date of filing: **06.07.2015**

(51) Int Cl.:
***C08F 2/18*** (2006.01) ***C08F 212/08*** (2006.01)
***C08F 10/08*** (2006.01) ***C09K 8/80*** (2006.01)
***C09K 8/62*** (2006.01)

(86) International application number:
**PCT/ES2015/070526**

(87) International publication number:
**WO 2016/005637 (14.01.2016 Gazette 2016/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **07.07.2014 AR P140102521**

(71) Applicants:
- **Sotro Financial Inc.**
  **Ciudad de Panamá (PA)**
- **Sepp, S.r.l.**
  **Ciudad de Buenos Aires (AR)**
- **Hackländer, Guido M.**
  **28050 Madrid (ES)**

(72) Inventors:
- **CARELLA, José M.**
  **7600 Mar del Plata (AR)**
- **PIACENTINI, Carlos A. L.**
  **7600 Mar de Plata (AR)**
- **PEREZ, Claudio J.**
  **7600 Mar de Plata (AR)**
- **TOMBA, Juan P.**
  **7600 Mar De Plata (AR)**

(74) Representative: **ABG Patentes, S.L.**
**Avenida de Burgos, 16D**
**Edificio Euromor**
**28036 Madrid (ES)**

# (54) SYNTHETIC NANOCOMPOUNDS IN THE FORM OF MICROPARTICLES, PROCESS FOR PRODUCING SAME, PROPPING AGENTS AND FRACTURING FLUIDS FOR GAS AND OIL EXTRACTION PROCESSES

(57) Synthetic nanocomposites in microparticle form allowing great deformation before breaking, especially useful for the preparation of synthetic low density proppants to be used in unconventional extraction processes of oil and gas (fracking). The process to obtain said nanocomposites, proppants and fracture fluids for extraction processes of oil and gas is also described.

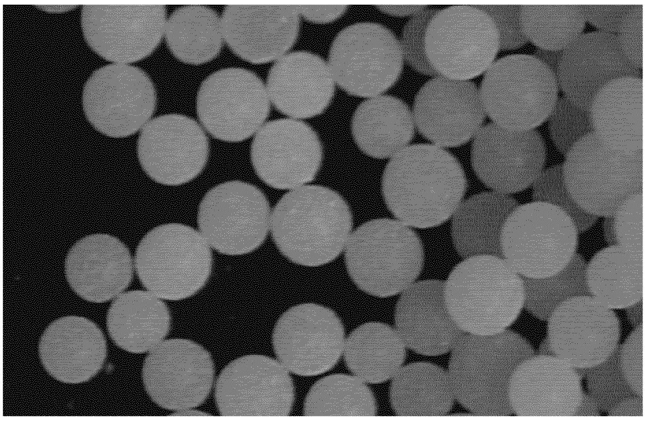

FIGURE 3

EP 3 192 814 A1

## Description

BACKGROUND OF THE INVENTION

FIELD OF INVENTION

This invention is related to the field of high modulus and tenacity synthetic nanocomposites in microparticle form widely used in several industries. In particular, this invention refers to the design and production process of said microparticles, their use as low density synthetic proppants and a fluid comprising them. The proppants comprising the particles of this invention can be especially used in the unconventional extraction processes of oil and gas also known as "fracking".

Even though this invention is oriented to the application of this new proppants to the extraction industry of oil and gas, by means of fracture fluids, it is important to stress that the material in microparticle form of this invention can also be used in other fields such as bearings for the slide of heavy parts in the construction and mechanical industries, torque reducers used in the drilling of oil wells and in other types of wells, etc.

DESCRIPTION OF PRIOR ART

The use of microparticles known as proppants is widely known in the field of unconventional extraction of oil/gas. Proppants include sands and ceramic particles comprised within fluids used to fracture the matrix. All materials in particle form used as proppants work by getting into the fractures caused by the injection of a highly pressurized fracture fluid to prevent the fractures from closing once the pressure of the fluid is reduced. The proppant props the fracture open allowing the oil/gas to flow and be extracted. Initially, natural and treated sands were used as proppants. In the last years, several synthetic proppants showing numerous operative advantages such as uniformity of size, roundness, hardness, tenacity and low density, have been developed.

Particles made out of styrene and divinylbenzene copolymers have been used for over 60 years in different industrial and lab applications and were always obtained using similar production procedures. A brief description of the state of the art, regarding the production and use of low density synthetic proppants obtained from crosslinked styrene copolymers, can be found in several patent documents describing different aspects of the same type of product and improvements to its mechanical properties: e.g. US 6.248.838, US 8.278.373, US 5.531.274, US 6.059.034, US 6.330.916, US 6.451.953, US 7.803.740, US 7.902.125, and US 8.088.718. The most important innovations comprised in some of these documents are briefly described below.

All the products described in the prior art are styrene copolymers synthesized using methods that may generate linear polystyrene chains, since the styrene acts as monofunctional in a free-radical homopolymerization. In order to change the chemical structure and some chemical, thermal and mechanical properties, crosslinking agents, like divinylbenzene and others with 2 or more functional groups, are added, which contributes chemical crosslinks rising the Glass Transition Temperature (Tg) of the resulting three-dimensional network structure copolymer. The chemical crosslink provides the resulting copolymer with higher resistance to "creep" (deformation under constant pressure) and highly reduces its solubility and swelling in organic products. All these factors, of the utmost importance to proppants, are necessary for the material to withstand the action of organic solvents and the deformation under constant stress.

The proppant particle manufacturing is carried out by means of free radical copolymerization in aqueous suspension, using various types of peroxides -soluble in the organic phase and capable of being activated through heat-as initiators for free radicals. The organic mixture at the beginning of the copolymerization reaction contains -besides the peroxides and free radicals resulting from the thermal decomposition of the same- at least three types of highly free-radical reactive species: a) styrene double bonds, b) divinylbenzene double bonds (or other crosslinking agent) reacting in the first place, and c) the remaining divinylbenzene double bonds that generally do not react at the same rate as the first one since their electronic structure and mobility are affected by the first reaction. These resulting molecules start to rapidly grow in size, reducing the mobility of the whole system of reactants due to the increase in viscosity, and the reaction rate of all the present species are modified, giving rise to the so called diffusion-controlled reaction rate. System viscosity is increased because of two reasons: a) the increase in size of the molecules produced by the reaction and b) the rise of the glass transition temperature of the resulting solution. In the case of significant degrees of advances, reaction rates can become null when glass transition temperature approaches (in the order of 10-20 ° C) to the temperature of the reacting mixture. The aforementioned patents slightly differ in the methods used to manufacture the products whose structures are described in an elemental and synthetic manner. This is understandable since the modeling of the structure resulting from a reaction involving so many species -with an important part of the process being controlled by the reaction rate controlled by diffusion rate of the reactantsis extremely complicated and would require an exhaustive work of synthesis and analysis using tracers to identify structures due to their heterogeneity. In practical terms, said identification can be replaced -at lower cost- by the statistical experimental optimization approach.

Depending on the crosslinking agent used and the conditions of the reaction, in these types of copolymerizations -where the reacting mixture consists of styrene, free radicals and low molecular weight crosslinkers with only two double bonds per molecule- a great variety of structures can be obtained, which can be included between two limiting classes:

a) With a styrene reaction rate much higher than that of the crosslinking agents, polystyrene linear chains mixtures will be obtained -produced at a higher rate at the beginning of the reaction- mixed with other highly crosslinked structures obtained after the styrene concentration has drastically decreased. This type of mixture will present two glass transitions at different temperatures, and low resistance to "creep". It will be soluble in much of the organic agents like the ones found in oil wells. Similar final results will be obtained in the reverse situation, i.e. if the reaction rate for the crosslinkers is much higher than for styrene.

b) If styrene and crosslinkers reaction rates are similar, a more or less homogeneous branched structure will be obtained -whose characteristics will basically depend on the change of reaction rate experienced by the crosslinking agent after the reaction of its first functional group- with only one glass transition, higher than that of the product type a), good resistance to "creep" and less solubility in organic solvents.

If the crosslinkers, contained in the reacting mixture, contain high molecular weight species like the remaining double bond polymers, the variety of structures obtainable in the process is wider due to phase separation processes that can occur, which are explained in detail further on.

Most of the relative improvements described in the aforementioned patents indirectly refer to methods that, in principle, would allow to better control the structure evolution of the crosslinked copolymer.

Patent US 6.248.838 describes a method for reaction temperature programming which helps maintaining a supply of free radicals -obtained from peroxides thermal decomposition- approximately constant. It is adduced that this supply at constant rate should lead to constant polymerization rates and should cause the evolution of the molecular structure to follow a set path. This shall only be true at low conversion rates, and no longer applies as soon as the reaction rate control starts being influenced by the diffusion rate of free radicals joint to big molecules. Reaction rate control via diffusion rate of reacting free radicals has its best known example in the Trommsdorff effect, autoacceleration produced in styrene homopolymerization described in practically all of the textbooks on the matter. Technology for styrene production is heavily based on methods allowing high monomer conversions without the dangerous effects of autoacceleration. The method to calculate the reaction temperature program is found in most of the specific textbooks since the 1950s. That is to say, this is public information known to experts in the art.

Patent US 6.248.838 also includes a number of crosslinking agents similar to divinylbenzene in that they contain at least two double bonds, therefore acting as bifunctional in the copolymerization; however they differ in the chemical structure binding both of the double bonds to each other. All the aforementioned crosslinkers have in their structure two double bonds which can react with free radicals, bonded to each other via a carbon chain or -as in the case of divinylbenzene- a rigid bridge containing a benzene ring giving rise to a high glass transition temperature. It is the bond between the reacted double bonds that allows the formation of branches, and eventually the insoluble three-dimensional structure. These crosslinking agents have in their structure two double bonds and -because of the reasons to be explained later- do not cause phase separation processes like in the present invention. Said patent includes some crosslinking agents with a structure -carbon chain bond between the double bonds- more flexible than divinylbenzene, which should reduce the change in reaction rate of the double bond reacting in second place, but it does not provide detailed information with regards to this mechanism of copolymerization.

Patent US 8.278.373 includes a thermal treatment that -according to what it is stated in said patent- should increase the glass transition temperature of the final product. Glass transition temperature will only rise if said thermal treatment attains that the conversion rate of the remaining double bonds increases over the value obtained at the end of the copolymerization process. In order for this to happen, it is necessary that in the previous steps the reaction has been stopped due to lack of mobility of the functional group, be it because of excessively slow diffusion or steric hindrance; both effects can be reduced by rising the temperature of the reaction. These concepts are also familiar to any expert in the art, as they can be found in specialized textbooks since many years.

Patent US 8.278.373 also includes the use of reinforcement particles to increase the effective Young's modulus of the styrene copolymers three-dimensional network. The use of reinforcement particles and nano-reinforcements has been widely described in the public literature since dates before this patent.

Said Patent, US 8.278.373, also includes the use of peroxides which, by thermally decomposing, produce low molecular weight free radicals and, presumably, allow a wider reach of the polymerization reaction at high conversions. This is so because smaller size promotes a higher diffusion rate which in turn allows reacting double bonds which at this stage of the process have little mobility, as in the case of the aforementioned second divinylbenzene double bond. The type of peroxide and the principle of greater mobility associated to the smaller size of the resulting fragments of the thermal decomposition have been explicitly mentioned at least by the firm Atofina before the year 2000, as a comparative

advantage as opposed to other products (ref: http://www.luperox.com/export/sites/organicperoxide/.content/medias/downloads/literature/ luperox-oraanic-peroxides-better-performance-in-suspension-polystyrene.pdf ; http://terpconnect.umd.edu/-choi/MSDS/Atofina/ORGANIC%20PEROXIDES.pdf).

The results mentioned for patents US 6.248.838 and US 8.278.373 represent the most important advances regarding the traditional art of copolymerization of styrene with divinylbenzene, as attempts to improve the mechanical and structural properties of the final product.

The variants of the state of the art discussed above refer to monolithic structure particles with only one glass phase at ambient temperature.

In the market, there are other particle systems acting as proppants (refer for instance to information found in http://www.dow.com/scripts/litorder.asp?filepath-liquidseps/pdfs/noreg/177-01732.pdf) also known as "Plastic Ball Bearings". These systems, based on technologies derived from the production of the so called ion-exchange resins, consist of spherical particles with a copolymer structure of styrene with divinylbenzene, vitreous at ambient temperature, with homogenously spread microholes. They can withstand high admissible deformations which are not recoverable, i.e. they are produced under plastic regime. In the process of suspension polymerization, reacting mixtures are added with specially designed non-reacting solvents, which due to the relatively small size of their molecules produce -because of similar reasons to that of the ones to be explained later on-, a domain segregation of non-reacting solvent at a nanometric scale increasing the admissible deformation due to generalized fluence. These solvents can be later extracted from the particle to avoid a decrease in the glass transition temperature, leaving microholes in the glass matrix. This phase separation -continuous glass phase with microholes- drastically decreases the breaking of particles in standard test used for proppants, but necessarily reduces the values for Young's modulus and increases deformation under pressure, thus limiting the range of admissible pressure values for its use before compaction which decreases the permeability of the particles bed to non acceptable values.

## DESCRIPTION OF THE FIGURES

Figure 1 represents a photograph of the particles of the prior art, after being subjected to pressure deformation tests;

Figure 2 shows an exploded view of the particles of the prior art after being subjected to pressure deformation tests;

Figure 3 shows a 60 times magnification of the particles of the present invention;

Figure 4 shows a photograph of the particles of the present invention after being subjected to pressure deformation tests.

Figure 5 represents another photograph of the particles of the present invention after being subjected to pressure deformation tests;

Figure 6 shows the measurement results of the shear modulus values as a function of temperature; and finally,

Figure 7 shows enthalpy change values as a function of temperature.

## BRIEF DESCRIPTION OF THE INVENTION

By virtue of the current state of the art, it will be very convenient to have new proppants with a higher concentration of covalent-bond bridges of the three-dimensional molecular network, to have a more favorable cost structure, with a wide range of structures contributing high Young's modulus values and allowing greater deformation before breaking, and to have the technology to balance costs and mechanical performance.

Therefore, it is the object of this present invention to contribute a new technology that allows obtaining nanocomposite particles, with low density and high modulus values, and absorbing greater deformation before breaking. Breaking produces fines which are highly unwanted since they are trapped in the narrowest channels of the particle bed and decrease permeability of said bed.

Another object of the present invention is to contribute high modulus and tenacity synthetic nanocomposites in particle form with applications in low density synthetic proppants which are especially useful in the unconventional extraction processes of oil and gas, also known as "fracking" processes.

Another object of the present invention is to contribute a material in microparticle form with applications in torque reducers in drilling operations of oil wells and other types of wells.

An additional object of this invention is to contribute a fracture fluid for the extraction processes of unconventional oil and gas which includes nanocomposite microparticles.

A further object of the present invention is to contribute a material in microparticle form with applications in bearings for the sliding of heavy parts in the construction and mechanical industries.

Another object of the present invention is to contribute a process for the production of nanocomposites microparticles.

For the sake of greater clarity and comprehension of the object of the present invention, Figures 1 and 2 have been included. They show photographs of prior art particles, with a diameter of 0.45mm, after being subjected to "Crush Tests" (API 19C RP Standard, at pressures of 8,000 and 10,000psi -551.8 and 689.6 Bar-), in which net spherical collapses -not recovered- caused by the force exerted by neighboring particles can be clearly seen.

In the case of the present invention, a process of polymer-polymer phase separation - controlled to obtain a continuous vitreous phase and an elastomeric phase in domains of nanometric size with an elastomer volume percentage of up to 15%, preferably between 0.5 and 8%- allows considerably increasing the admissible deformation values without breakings, but since the separate elastomeric phase remains covalently bonded to the continuous matrix, the possible decrease in the Young's modulus values is significantly lower, and the deformations produced in the "Crush Test" (API 19C RP Standard) are recoverable to a large extent. Figures 4 and 5 show photographs of particles of the present invention, of a diameter of around 0.45mm, after being subjected to a "Crush Test" (API 19C RP Standard, at pressures of 10,000 and 12,000 psi -689.6 and 827.6 Bar-) where the deformation produced by the force exerted by nearby particles can be clearly seen, which does not consist of net spherical collapses but is partially recovered.

In a more detailed description of the figures, it can be noted that Figure 1 represents a photograph of prior art particles, after being subjected to pressure deformation, in which said particles, having a diameter of 0.45mm, had been subjected to "Crush Tests" (API 19C RP Standard, at pressures of 8,000 psi -551.7 Bar-). Net spherical collapses -not recovered- that were produced by the force exerted by neighboring particles can be clearly appreciated.

Figure 2 shows an exploded view of prior art particles with a diameter of around 0.45mm, after being subjected to pressure deformation. Tests were of the "Crush Test" type (API 19C RP Standard, at a pressure of 10,000 psi -689.6 Bar-). Said particles clearly show the presence of net spherical collapses -not recovered-, greater than those shown in Figure 1, due to the force exerted by the neighboring particles.

Figure 3 shows a 60 times microscope-magnification photograph containing the particles of the present invention.

Figure 4 shows a photograph of the particles of the present invention, after being subjected to pressure deformation in a "Crush Test" (API 19C RP Standard, at a pressure of 10,000 psi -689.6 Bar-), where the deformation produced by the force exerted by nearby particles can be clearly seen. Said deformation does not consist of net spherical collapses but is partially recovered.

Figure 5 represents another photograph of the particles of the present invention, after being subjected to pressure deformation in a "Crush Test" (API 19C RP Standard, at a pressure of 12,000 psi -827.6 Bar-) where the deformation produced by the force exerted by nearby particles can be clearly seen. Said deformation does not consist of net spherical collapses but is partially recovered.

Figure 6 shows measurement results of shear modulus values as a function of temperature. Glass transition is calculated as the temperature where the abrupt drop in modulus values begin.

Figure 7 shows enthalpy change values as a function of temperature. The transition temperature is calculated at half way the abrupt change in enthalpy change. Transition temperature values calculated from modulus measurements and calorimetry coincide well.

## DETALIED DESCRIPTION OF THE INVENTION

For a detailed description of the invention, it is highlighted that the concept innovation of the present invention directly arises from the use of crosslinking agents with molecular structure much different to the classic ones already described in the patents discussed before. The classical molecular structure for crosslinking agents comprises only two double bonds, linked together by a carbon atom bond which can be more or less rigid, and in earlier technologies it consists of a benzene ring similar to styrene ring.

For the present invention, the crosslinking agents used contain many double bonds in the same molecule -of the order of thousands of double bonds per crosslinking molecule-bonded together with carbon links. This type of molecular structure leads to a significant increase in the final molecular bridges concentration for the tridimensional molecular network, as it includes the ones already existing before the copolymerization reaction. It also leads to the showing up of several non-convenient features that have been solved as detailed later, giving a technology capable of producing specially designed products.

The crosslinking agents used in this invention are diene homopolymers, copolymers, and terpolymers -containing two double bonds per each 4 or 5 carbon atoms- with other monomers of the vinyl series. As a general rule,

polymers of a different chemical nature are not miscible with each other, but they are indeed soluble in small molecules. Following the aforementioned reasoning, styrene homopolymerization -styrene reaction only- would yield a homopolymer which would be separated from the crosslinking agent in a different phase -resulting in a poor quality material- unless the eventual phase separation is controlled causing the copolymerization of styrene with the polymer used as crosslinking agent. A correct control of copolymerization rate leads to a continuous vitreous phase (with a high concentration of crosslinks), and to a two phase separation -a continuous vitreous one and a dispersed elastomeric one with domains of nanometric size- providing the desired mechanical properties and tenacity. Therefore, the choice of chemical composition and microstructure of the crosslinking agent must be combined with an adequate reaction rate control. This also results in a more favorable cost structure and allows obtaining a wider range of structure yielding high Young's modulus values and allowing great deformation before breaking, due to phase separation increasing tenacity via generalized fluence.

The production of low density synthetic proppants is based on the copolymerization of styrene drops suspended in an aqueous medium. The size and shape of styrene drops are stabilized through a gentle stirring of the medium, in conjunction with an adequate amount of agent that acts as surfactant, since it contains, in the same molecule, some sectors having affinity with water and others with the organic medium. The geometric arrangement of the water-styrene-surfactant system, associated to the state of minimum potential energy, corresponds to a film of the surfactant agent coating the drops of organic material dispersed in the water having a spherical shape due to the minimum surface-volume ratio.

The water suspension system contributes at the same time a partition system of the reaction mass in spherical particles of a controlled size and an adequate rate and heat transmission capacity, necessary to precisely control particle temperature and avoid overheating which would deviate the path designed and planned for the copolymerization reaction.

Styrene polymerization is initiated and terminated through free radicals, generated within the drops (future particles) by means of the thermal decomposition of the soluble peroxides in their organic liquid. Free radicals react with the double bonds of styrene and of the crosslinking reactants, transforming the mixture of styrene and crosslinking polymer molecules into a profusely branched and crosslinked polystyrene three-dimensional structure. Crosslinking agents have at least two bifunctional reactive points, normally not reacting at the same rate and temperature. In general, it is observed that crosslinking agents having more reactive points per molecule contribute better mechanical properties to the product, particularly higher values of glass transition temperature and admissible elastic deformation, due to higher concentration of bonds in the three-dimensional network of the molecule. Glass transition temperature is the temperature at which the Young's modulus value of an amorphous polymer decreases by a factor varying between 2 and 3 orders of magnitude.

More specifically, the manufacturing process of the nanocomposite microparticles of the present invention involves suspension copolymerization, in an aqueous medium, of drops of styrene (containing the dissolved crosslinking agents that have at least two bifunctional reactive points) through the production of free radicals by means of peroxide thermal decomposition, controlling the balance of styrene and crosslinking agent stoichiometry and the evolution of reaction temperatures. The crosslinking agents used were mixtures of copolymers of butadiene, isoprene and other dienes, plus variable ratios of divinylbenzene. The stoichiometric ratios of styrene double bonds to crosslinking agent double bonds ranged from 3 to 60 styrene double bonds per each crosslinker double bond in the original reacting mixture. Reaction temperatures were programmed in ascending ramps and varied from 65 °C to 190 °C to attain the maximum possible conversion. The maximum possible temperatures of the process were of 250 °C, preferably within the aforementioned range (65 °C to 190 °C).

To obtain optimum properties of the final particle, the reacting system must be adequately balanced in its stoichiometry and its temperature program, which directly related to the types of peroxides involved in the formulation. During the course of the reaction in the reactor, within each drop there must coexist an adequate concentration of free radicals with styrene and the available crosslinking agents, accessible to free radicals. Very high concentrations of free radicals cause their elimination, due to its high reactivity; very low concentrations will lead to slow polymerization and crosslinking rates, prompting unwanted changes in the final structure of the solid.

The present invention describes the use of a crosslinking reactant system specifically designed to attain a more efficient degree of polystyrene crosslinking reaction in a variety of polymerization procedures, to improve the rigidity, tenacity, maximum possible temperature for use, resistance to solvents and to the environment of spherical styrene copolymer particles. The system of crosslinking reactants has been designed to comply with several requisites (that includes obtaining the maximum possible chemical crosslinking density and the maximum possible degree of chemical reaction completion) and polymerization statistics allowing an adequate solubility in the styrene-polystyrene mixture, without decreasing the glass transition temperature of the final product.

This invention also shows the use of a system of peroxides as free radical initiators in a wide range of temperatures involved in the process of styrene polymerization and crosslinking. Types and relative concentrations of peroxides to be used are specifically designed to maximize the efficiency of the reaction between free radicals with styrene and its crosslinkers.

Proppants manufactured according to this invention must comply with at least two basic requirements:

a) High Young's modulus values, to avoid that deformation, caused by high pressure values, leads to obstruction of the space among randomly packed spheres through which fluids shall flow, and

b) High admissible deformation values, to minimize the breaking of spheres which may originate smaller size particles, which will be carried by the fluid and eventually trapped in the narrowest spaces for fluids flow, thus reducing the permeability of the porous bed.

The molecular structures of classical crosslinking agents, including those of the patents aforementioned, show two reactive points for free radicals, consisting in two double bonds connected by an organic material bridge, which in the case of divinylbenzene is a benzene ring. This proposal describes the use of crosslinking agents having in their molecules large amounts of double bonds -on the order of thousands per molecule- with a concentration whose average value can be estimated on the order of one per each three carbon atoms along a main chain-, bonded by organic bridges with covalent bonds.

In Scheme "1", a sketch of a molecular structure produced by the reaction of several molecules of styrene with divinylbenzene is presented, as an example of styrene copolymerization with a crosslinking agent containing only two double bonds in its original molecule (in this case divinylbenzene). Secondary carbon atoms of the original double bonds that were transformed into tertiary carbon atoms in the copolymerization process are highlighted in larger size font to ease reading. The 4 wavy lines appearing in the final structure indicate the presence of 4 polystyrene chains at the end of the polymerization process, bonded to the bridge produced by the divinylbenzene molecule.

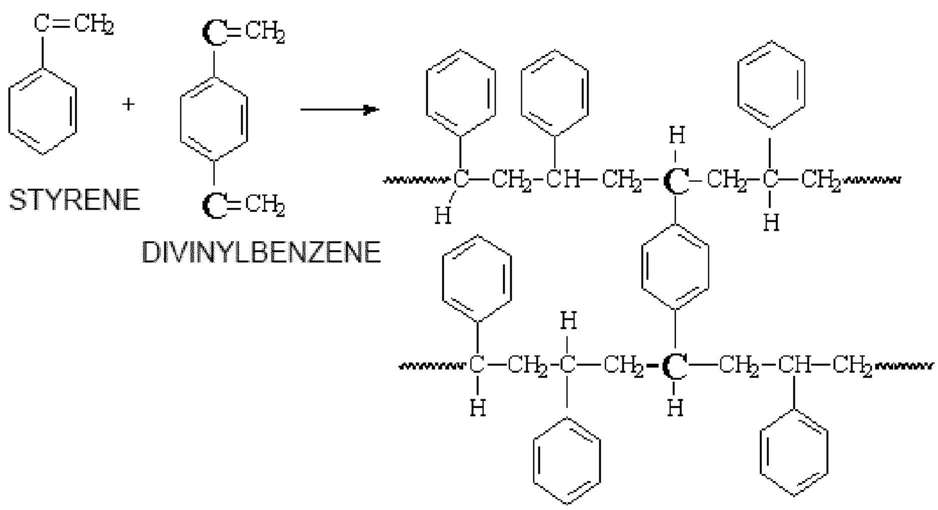


Scheme 1

In Scheme "2", an example of a molecular structure produced by the reaction of several styrene molecules with a sector of the macromolecule of a crosslinking agent which is a butadiene-isoprene copolymer is presented. It can be observed that -apart from the two remaining chain sectors of the copolymer original chain, indicated with a zigzag line- at the end of the reaction 6 extra chains are obtained -wavy lines- which are bonded to the original double bond group.

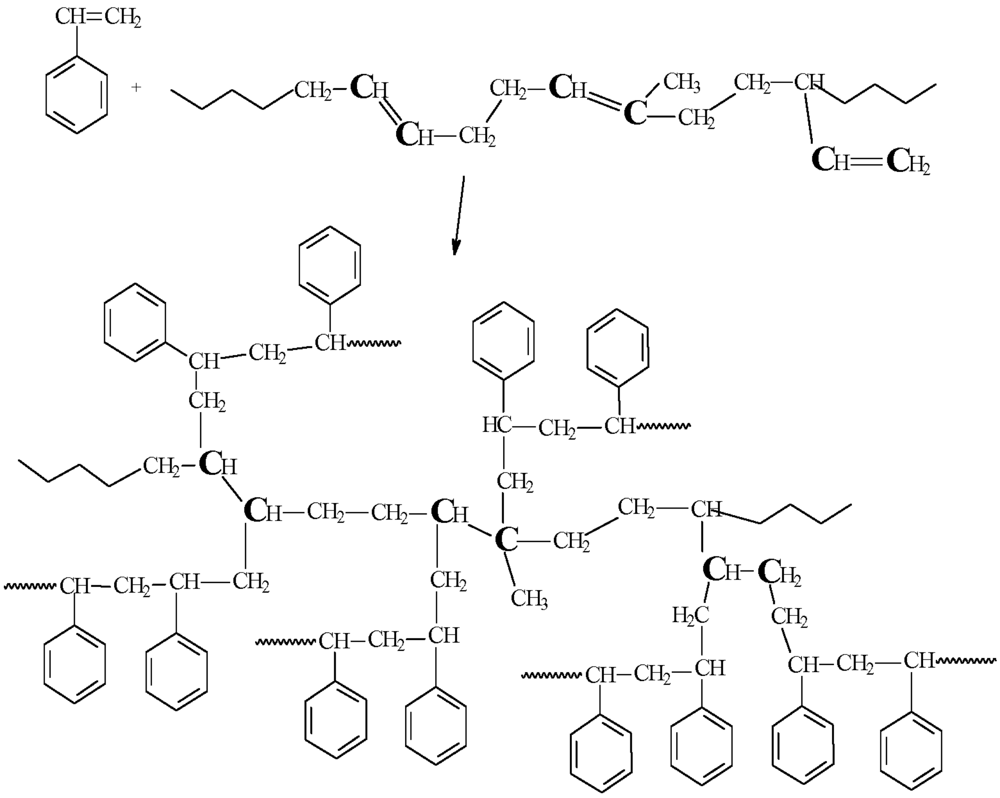

Scheme 2

It should be noted that in both reaction schemes 1 and 2, a complete reaction is assumed, as can only be obtained in polymerizations where reaction temperature is considerably higher than the glass transition temperature of the reacting mixture. The crosslinker used in Scheme "1" produces, in the final structure, 4 polystyrene chains bonded to the 10 carbon atoms contained in the crosslinker original molecule. The crosslinker used in Scheme "2" produces 8 polystyrene chains bonded to the group of 12 carbon atoms contained in the crosslinker original molecule. The higher ratio of chains bonded by each carbon atom of the crosslinking group leads to a higher concentration of elastically active chains in the product of the present invention, which necessarily leads to higher modulus values and tenacity.

Materials used in the present invention as crosslinking agents are -due to its size and molecular structure-polymers, and more specifically, homopolymers, copolymers and terpolymers of isoprene, butadiene and of other dienes, in their block, statistical (random) and intermediate structure versions, in a wide range of molecular weights, ranging from 1000 to 300000 dalton, with linear and branched structures, and mixtures of the same. Included as comonomers are, apart from isoprene and butadiene, other dienes and all monomers known as vinyls (styrene, alpha-methyl-styrene, and divinylbenzene), acrylics, ethylene, propylene and acrylonitrile. Within the crosslinking agents are also included the partially hydrogenated versions of homopolymers and copolymers of isoprene, butadiene and other dienes, as well as all monomers known as vinyls (styrene, alpha-methyl-styrene), acrylics, ethylene, propylene and acrylonitrile. Also included as crosslinking agents are the mixtures of divinylbenzene with copolymers and terpolymers of butadiene, isoprene and other previously mentioned dienes.

One of the advantages of using the type of crosslinking agents of the present invention arises from the fact that by using divinylbenzene as crosslinker, the concentration of double bonds is two per each six carbon atoms of the benzene ring. Instead, by using the type of crosslinkers proposed in the present invention, the concentration of double bonds will be on the order of up to two per each three carbon atoms, with an average estimated as most probable of two per each four carbon atoms, thus allowing the production of a more compact three-dimensional network molecular structure.

Another of the advantages of the present invention is derived from the fact that, for bifunctional crosslinkers like divinylbenzene, each double bond is initially bonded -i.e. before the copolymerization process- only to another one. In the case of the type of crosslinker of the present invention, each double bond is initially bonded to at least two others,

thus increasing original bond density in the future three-dimensional network, since the reactions of the double bonds render -each of them- a new bond, which is added to the initially present ones.

A possible drawback arising in these systems, derived from the use of polymers as crosslinkers, has already been mentioned in order to describe the structures that can be obtained as mixtures of branched and linear species not covalently bonded to each other. Normally, -as described by the Flory-Huggins theory, widely confirmed experimentally in the literature-, polymers from different chemical species having molecular weights above a certain limit -varying among chemical species but being generally low- are not miscible with each other, this rule having very few exceptions. When the set of chemical species present in a reacting system containing polymers leads to the production of a second type of polymers, if this is not chemically bonded to the first one, a phase separation occurs, which many times can be macroscopically observed. The system of reactants, included in the copolymerization, used for the inclusion of polymers as crosslinking agents, has been designed to allow an early reaction of a considerable proportion of the double bonds covalently bonded to the main chain of the same, thus controlling -partially or totally, according to the desired type of product-, said phase separation.

Flory-Huggins theory describes the thermodynamic tendency for the evolution of the mixing and phase separation as a sum of the effects of the changes in entropy and enthalpy of the system as a whole. The applicable form of the Flory-Huggins theory to describe the transition between miscibility and phase separation of two types of different-chemical species polymers is:

$$\Delta G = RT\left\{\left(\frac{\phi_1}{N_1}\right)\ln\phi_1 + \left(\frac{\phi_2}{N_2}\right)\ln\phi_2 + \chi\phi_1\phi_2\right\}$$

Where:

- $\underline{\Delta G}$ is the free energy change associated with the process of mixing (or separating) two species, "1" and "2". In this case, we take styrene as species "1", which is transformed into a polymer, and polymer used as crosslinker as species "2", without attaching any importance to the fact that many of these polymers are actually copolymers from two different chemical species.

- $\underline{\phi_{1\square}}$ is the initial volume fraction for styrene molecules, which during the copolymerization process are transformed into a polymer. The well-known volume contraction produced by the polymerization reaction is not taken into account here in this qualitative explanation, and the value for $\underline{\phi_1}$ is considered constant during the whole process.

- $\underline{\phi_2}$ is the volume fraction for the polymer used as crosslinker, which for the sake of simplicity is considered constant. Obviously, $\phi_1+\phi_2=1=$ constant.

- $\underline{N_1}$ and $\underline{N_2}$ are the average polymerization degrees for each species.

- $\underline{\chi}$ is the parameter defining the mixing enthalpy for the solution, that is, the amount of heat exchanged in the process of mixing, which normally takes on positive and small values as long as the species "1" and "2" be chemically different, and in this particular case will depend on the chemical composition of the polymer used as crosslinker and on its molecular architecture. This parameter is very difficult to precisely measure in experiments.

The first two terms of the right side describe the changes of entropy of the system produced when fractions in volume of species "1" and "2" are changed, or when the number of cells occupied by any monomer ("1" or "2") is forced to share neighboring cells to other of its species via chemical bond, as in the case of polymerization, changing the values of $N_1$ and $N_2$.

Negative $\Delta G$ values will indicate that the mixing process is associated to a decrease in the free energy of the system, and therefore they predict that the two species will mix and stay as a stable and homogeneous solution.

Positive $\Delta G$ values will indicate that mixing will not occur, or if forced, only dispersion with macroscopic phase separation will be attained.

In the system of interest, where styrene initially dissolves the crosslinking polymer, even though values of $\chi$ are not favorable for dissolution (i.e. positive but small), the weight of the term $\left(\frac{\phi_1}{N_1}\right)\ln\phi_1$, where the value of $N_1$ is initially $N_1=1$, causes the term $\Delta G$ to be initially negative, as corresponding to a homogeneous solution. Since one of

the species ("1") is acting as a polymer solvent and is polymerizing, $N_1$ values will increase, decreasing the absolute value of the term $\left(\frac{\phi_1}{N_1}\right)\ln\phi_1$ and causing the values of $\Delta G$ to change from negative to positive, thus indicating that the mixing will destabilize and will start to separate into phases. If during styrene polymerization, the dissolved polymer reacts with forming molecules, producing a three-dimensional network, the process of phase separation will be impeded by the covalent chemical bonds between molecules previously constituting two different species and which have now become only one. It can be thus guaranteed that phase separation process will practically be "custom"-controllable, by selecting $\chi$ values by means of the chemical composition and molecular architecture of the crosslinking polymer, and the instant of phase separation initiation -instant being an advancement in the polymerization reaction- by means of the reactivity of the double bonds present in the polymer used as crosslinker. $\chi$ values more favorable for mixing will produce a phase separation onset for more advanced reaction advancements, and vice versa.--

Since, at the beginning of the reaction, the copolymerization reaction rate will be controlled by the concentration of double bonds and free radicals in the medium, it can be stated that for a given formulation (a mixture of styrene and crosslinking agents, with their respective initial values $\phi_1$, $\phi_2$, $\chi$, $N_1$ and $N_2$), reaction rate can be controlled via combinations of concentrations of peroxides and temperature programs.

A controlled phase separation process allows designing the final properties of the product. The separation of a fraction of a lower modulus (elastomeric) material as micro phase - percentage in volume of up to 15%, preferably between 0.5% and 8%-, allows increasing tenacity -increase in the admissible deformation before breaking- via generalized fluence. Microseparation also allows a more efficient control of the glass transition temperature mechanically measured, since by not separating into phases, the elastomer could produce a decrease in the glass transition temperature of the continuous phase, as detailed in copolymerization theories. This fact explains the advantage of using copolymers not having only double bonds, to delay, as needed, the immobilization instant of the crosslinking polymer, allowing only phase separation in domains of very small size -on the order of 1000 A°-, so as not to reduce glass transition temperature of the continuous phase but still increasing nonetheless the tenacity of the continuous phase as detailed above.

The association of the choice of crosslinking polymer type to be used and the type of peroxide, together with an adequate reaction temperature program allows a correct balance of high volumetric bond concentration in the three-dimensional network with a microphase separation with convenient volume fraction and sizes for the wanted balance of properties, as described above.

This invention is better illustrated with the following examples, which are not to be interpreted as a limitation to the scope of the present invention. On the contrary, it must be clearly understood that those knowledgeable in the art can have recourse to other embodiments, modifications and equivalent examples of the same, after having read the present description without straying away from the spirit of the present invention and/or the scope of its annexed claims.

PREFERED EMBODIMENTS

Styrene solutions of copolymers of isoprene and styrene, of butadiene and styrene, and of isoprene, butadiene and styrene were used. In these copolymers, both butadiene and isoprene contributed remaining double bonds which reacted in the crosslinking process at different rates according to their electronic structure and steric hindrance. Copolymerized styrene reduced the magnitude of the positive values of the parameter $\chi$ of the Flory-Huggins equation, and -since it does not have any available double bond to react as crosslinker- reduced the global reaction rate of the crosslinker, thus delaying to some extent the starting moment for the separation phases start, with the aforementioned purpose. $\chi$ values for each crosslinking styrene-copolymer pair were not measured experimentally, as the effect of the change in $N_1$ during the reaction rapidly cancels any difference existing between the copolymers used. A qualitative evaluation of the clearness of the solution of copolymer in styrene was used instead; those types of copolymers whose 10% solutions in styrene at ambient temperature showed turbidity were ruled out. The proportion ranges of styrene in the copolymer used were varied between 15% and 48%, and the proportion ranges of isoprene and butadiene between 12% and 85%. Random and block copolymers were used and with linear and branched structures. The solvent was always styrene with divinylbenzene proportions between 2% and 15%. Crosslinking copolymer concentration was varied between 2 and 15%. Peroxides used were chosen according to their temperature ranges corresponding to half-life values of 6 minutes and 60 minutes, so as to be able to estimate reaction rates and the possibility of autoacceleration of the reacting system. Temperature ranges corresponding to those half-life values of 60 minutes varied between 85 °C and 152 °C.

A) Formulations for the production of proppant particles were designed following the basic qualitative rules detailed above. A multivariate statistical optimization system was used. In these optimization systems, the effects different variables have on the final properties of interest are experimentally explored by means of small changes in the concentration values and types of reactants in the formulation, and in the values of the parameters defining the process, such as

temperatures and reaction times, volumetric ratio between water and the organic phase of the suspension, ratios of height to diameter of the suspension polymerization reactor, size, number and placement of baffles, size, number and placement of shaker/s blades, and speed and intensity of the stirring. The ranges of the values to vary these parameters are chosen based on the experimental results published in public literature by other authors and on the previous experience of the directors of the project. The optimum combination within that group of values was chosen for the different variables. The process can be repeated more than one time if a satisfactory combination is not achieved, better delimiting the exploration field in each case. This optimization method is standard for the experts in the art, knowledgeable about statistical methods, and was described in detail and exemplified in the book Statistics for Experimenters - Design, Innovation and Discovery" (Box, Hunter & Hunter) -Wiley-Interscience (Second Edition) (2005) under the heading "Fractional Factorial Design".

B) To test the different formulations developed so far, over fifty combinations of peroxides, crosslinking agents and temperature programs were used, as shown in the following table:

| Polybutadiene type | % | # | % of DVB | % Perox. #1 | % Perox. #2 | % Perox. #3 | % Perox. #4 | Tg (°C) | G* (MPa) |
|---|---|---|---|---|---|---|---|---|---|
| N/A | 0 | 1 | 0 | 0.20% | - | 0.30% | | - | - |
| N/A | 0 | 2 | 5 | | | | | 132 | 723.5±16.5 |
| N/A | 0 | 3 | 10 | | | | | 126 ± 6 | 839.5 ± 28.5 |
| N/A | 0 | 4 | 0 | 0.20% | 0.60% | - | | 100 | 332 ± 23 |
| N/A | 0 | 5 | 5 | | | | | 118 ± 4 | 605.55 ± 72.5 |
| N/A | 0 | 6 | 10 | | | | | 130 | 623.5 ± 47.5 |
| N/A | 0 | 7 | 0 | 0.20% | - | 0.30% | | - | - |
| N/A | 0 | 8 | 5 | | | | | 120 | 770 ± 10 |
| N/A | 0 | 9 | 10 | | | | | 127 | 760 ± 100 |
| N/A | 0 | 10 | 0 | 0.20% | 0.60% | - | | - | - |
| N/A | 0 | 11 | 5 | | | | | 115 | 780 |
| N/A | 0 | 12 | 10 | | | | | 130 ± 3 | 900 ± 50 |
| 1 | 5 | 13 | 0 | 0.20% | 0.30% | - | | 97.5 | 835.2 |
| 1 | 5 | 14 | 0 | | | | | 98.6 | 368.5 |
| 1 | 5 | 15 | 3 | | | | | 111.82 | 847.2 |
| 1 | 5 | 16 | 3 | | | | | 111.82 | 720.7 |
| 2 | 5 | 17 | 0 | 0.20% | 0.30% | - | | 101.19 | 835.2 |
| 2 | 5 | 18 | 0 | | | | | 106.15 | 652.2 |
| 2 | 5 | 19 | 3 | | | | | 112.22 | 674.3 |
| 2 | 5 | 20 | 3 | | | | | 115.03 | 940.7 |
| 3 | 5 | 21 | 0 | 0.20% | 0.30% | - | | 100.79 | 884.3 |
| 3 | 5 | 22 | 0 | | | | | 101.22 | 413.1 |
| 3 | 5 | 23 | 3 | | | | | 114.58 | 815.6 |
| 3 | 5 | 24 | 3 | | | | | 114.58 | 839.2 |
| 1 | 5 | 26 | 0 | 0.20% | 0.30% | - | | 102.64 | 823.4 |
| 1 | 5 | 27 | 3 | | | | | 105.72 | 954.2 |
| 2 | 5 | 28 | 0 | 0.20% | 0.30% | - | | 103.47 | 918.6 |
| 2 | 5 | 29 | 3 | | | | | 112.46 | 1154.23 |

(continued)

| Polybutadiene type | % | # | % of DVB | % Perox. #1 | % Perox. #2 | % Perox. #3 | % Perox. #4 | Tg (°C) | G* (MPa) |
|---|---|---|---|---|---|---|---|---|---|
| 3 | 5 | 30 | 0 | 0.20% | 0.30% | - | | 113.05 | 823.4 |
| 3 | 5 | 31 | 3 | | | | | 112.75 | 954.2 |
| 1 | 5 | 32 | 0 | 0.20% | 0.30% | 0.30% | | 101.6 | 976.8 |
| 1 | 5 | 33 | 3 | | | | | 113.23 | 964.7 |
| 2 | 5 | 34 | 0 | 0.20% | 0.30% | 0.30% | | 102.2 | 976.8 |
| 2 | 5 | 35 | 3 | | | | | 113.02 | 909.5 |
| 3 | 5 | 36 | 0 | 0.20% | 0.30% | 0.30% | | 100 | 796.3 |
| 3 | 5 | 37 | 3 | | | | | 111.6 | 785.1 |
| 3 | 3 | 38 | 0 | 0.30% | 0.30% | 0.30% | | 98.2 | 823 |
| 3 | 6 | 39 | 0 | 0.30% | 0.30% | 0.30% | | 97.6 | 872 |
| 3 | 9 | 40 | 0 | 0.30% | 0.30% | 0.30% | | 97.2 | 1026 |
| 5 | 3 | 41 | 0 | 0.30% | 0.30% | 0.30% | | 98.3 | 941 |
| 5 | 6 | 42 | 0 | 0.30% | 0.30% | 0.30% | | 97.4 | - |
| 5 | 9 | 43 | 0 | 0.30% | 0.30% | 0.30% | | 99.1 | - |
| Polybutadiene type | % | # | % of DVB | % Perox. #1 | % Perox. #2 | % Perox. #3 | % Perox. #4 | Tg (°C) | G* (MPa) |
| 3 | 5 | 44 | 0 | 0.3% | 0.3% | 0.3% | 0.3% | 94.3 | - |
| 3 | 5 | 45 | | | | 0.3% | 0.50% | 96.7 | - |
| 3 | 5 | 46 | | | | 0.3% | 0.30% | 97 | - |
| 3 | 5 | 47 | 0 | 0.20% | | 0.3% | 0.30% | 98.9 | - |
| 3 | 5 | 48 | | | 0.3% | 0.30% | | 99.1 | - |
| 3 | 5 | 49 | 0 | 0.20% | | 0.3% | 0.30% | 101.3 | - |
| 3 | 5 | 50 | | | 0.3% B | 0.30% | | 99.7 | - |
| 3 | 5 | 57 | 3% | 0.20% | 0.3% B | - | | 110.5 | 1030 |
| 3 | 5 | 58 | | 0.20% | - | 0.30% | | 110.4 | 1150 |
| 3 | 5 | 59 | | 0.20% | 0.3% | 0.30% | 0.30% | 106.4 | 1090 |
| 3 | 5 | 60 | | 0.20% | | 0.3% | 0.30% | 108.6 | 1040 |
| 3 | 5 | 61 | | - | | 0.3% | 0.30% | 111.7 | 925 |

C) For each formulation, several samples in the shape of cylinders (6mm in diameter and 80mm in length) were produced in glass tubes of 0.5mm wall thickness. This method allowed dispensing with the arduous system of setting up a complete suspension polymerization for each of the formulations and conditions of the process to be tested, with its associated cost and work, and using only one reactor to simultaneously test polymerizations with different formulations (up to 1 per tube; with high number of tubes depending on the diameter of the reactor used) with a group of process parameter values common to all of the formulations tested in this set. Since polymerization in these tubes must be equivalent to the industrial suspension process, and since the suspension process can be modeled as a group of small mass polymerization reactors -suspended in a medium providing a very efficient heat transference for an adequate temperature control- the requisites to be met by this tube polymerization system are that the ratio of the tube external area to reacting mass volume be sufficiently high, and that the temperature difference between the center of the reacting cylindrical mass

and the internal surface of the glass tube be no more than 3 °C. The temperature difference between the center of the reacting cylindrical mass and the internal surface of the glass tube was calculated based on the reaction heat that has to be evacuated, with satisfactory results for these dimensions. Various diameters and numbers of glass tubes were tested in a water bath within a reactor with temperature and atmosphere control until delimiting an operation zone with an adequate combination of sample size and efficient temperature control, the parameter of interest in this case being the heating and cooling capacity of the reactor. Some of the formulations polymerized in glass tubes were also polymerized in suspension, in identical process conditions, obtaining results of physical properties (Young's modulus and glass transition temperature) very similar to those measured in the samples polymerized in glass tubes.
Table 1 shows the results of modulus values obtained through measurements on samples polymerized in glass tubes and in suspension. PB IV is a copolymer of butadiene and DVB is divinylbenzene.

Table 1

| Formulation | Styrene % in weight | PB IV % in weight | DVB % in weight | Perox. % in weight | Modulus of in glass polymerization (GPa) | Modulus of suspension polymerization (GPa) |
|---|---|---|---|---|---|---|
| A | 100 | 0 | 0 | 0,2 | 3,1 | 3,1 |
| B | 91 | 6 | 3 | 0,2 | 3,0 | 2,95 |
| C | 85 | 12 | 3 | 0,2 | 2,55 | 2,7 |

D) Cylindrical samples are very useful to rapidly and precisely measure values for Young's modulus and glass transition temperatures in a mechanical spectrometer with temperature control. The mechanical spectrometer, Anton-Paar model Physica II, consists of two coaxial axes ending in cylindrical clamps with adjustable conic nozzles taking a cylindrical sample from both ends. One of the axes is connected to the electric motor applying and measuring torque, and precisely measures the angular deformation as rotation of one of said coaxial axes. The system is contained in a chamber with temperature control via forced nitrogen convection. The shear modulus versus temperature graphs allow to calculate glass transition temperature as well. Figure 6 shows the results of measurements made with the mechanical spectrometer on cylindrical samples of some formulations differing in glass transition temperatures. Figure 7 shows enthalpy-versus-temperature characteristic curves -measured in a differential scanning calorimeter- of several formulations. Glass transition temperature values corresponding to formulations 52, 54 and 56 -measured using both methods- showed a good coincidence.
E) For some formulations, Young's modulus values were also measured by means of a nanoindenter, of the Hysitron brand (TI-950 Triboindenter), running at ambient temperature. These values coincided very well with the values measured in said mechanical spectrometer in point D). The nanoindenter does not have temperature control nor does it allow to estimate glass transition temperature, but is useful to measure some mechanical properties, like Young's modulus, directly over suspension produced particles. There is no other available instrument able to measure mechanical properties with samples this small.
F) Enthalpy-versus-temperature characteristic curves for several samples were measured in a Differential Scanning Calorimeter (DSC), Perkin-Elmer Pyris II, to calculate the glass transition temperature in standard form, such as the specific heat capacity increase midpoint, and compare it with the results obtained by the mechanical spectrometer. Results were highly coincident. This verification is necessary to verify whether the products obtained by glass tube polymerization are identical in behavior to those obtained via suspension polymerization. Some results are included in Figures 6 and 7 already described in point D) of this section.
G) Glass transition temperature values were also measured indirectly for particles obtained through suspension polymerization, by means of the mechanical spectrometer. For selected formulations, particles were included in a high-glass-transition-temperature crosslinked homopolymer epoxy plate; the plate was tested in a torsion test in the mechanical spectrometer, obtaining modulus-versus-temperature curves. These curves presented two drops in the modulus values: one corresponding to the epoxy resin and the other corresponding to particles polymerized in suspension. The glass transition temperature of the epoxy resin was measured in another similar plate without added particles.
H) Spherical particles were produced out of selected formulations in a pressurized stainless steel reactor, equipped with stirring and temperature control. The reactor has a capacity of 3 liters, hermetic lid with O-rings, pressurization and vent valves, thermocouple for measurement and temperature control which is submerged in the liquid, and a vertical shaft with blades specially designed to create a slight and homogeneous stirring of the whole liquid contained within it. It also has a system of vertical baffles. The group of baffles and stirring blades were experimentally tested in a glass recipient of similar dimensions to those of the reactor, to verify vertical recirculation of water and styrene solution with crosslinking polymer, and thus adjust the shaft rotation regime which is more convenient to control the size of the particles to be

produced. Reactor temperature is efficiently controlled by means of a system of band type stainless steel heaters, powered by a PID control system based on the thermocouple readings. Reactor refrigeration is solely produced by free convection from its external surface.

I) Size distributions of the particles produced in the suspension reactor range from 0.1 mm to 3 mm. Particles in the range of convenient size to be used as proppants were obtained by means of normalized sifting, of the fractions between sieve 20/40 and 50/70, to be tested.

J) Particles selected through sifting were subjected to compression test (Crush Test) (ISO 13503 Standard - API RP19C).

K) Particles were photographed after the compression test. Figures 4 and 5 show photographs of particles, manufactured according to the procedure described in this invention, after being subjected to "Crush Test" (API 19C RP Standard) at pressures of 10,000 and 12,000 psi -689,6 and 827,6 Bar-, respectively.

**Claims**

1. Synthetic nanocomposites in microparticle form formulated from polybutadienes, and other polydienes, allowing great deformations before breaking, with applications in diverse fields of the industry, especially in the preparation of low density synthetic proppants to be used in unconventional extraction processes of oil and gas (fracking), in bearings for the slide of very heavy parts in the construction and mechanical industries, in torque reducers for the drilling of oil wells and other types of wells, wherein said nanocomposite microparticles present a continuous glassy phase and separation of another phase, providing high Young's modulus values and an increase in their admissible deformation of up to 40 %.

2. The process for the production of nanocomposite particles of claim 1, comprising: suspension copolymerization in an aqueous medium of styrene drops containing crosslinking agents dissolved in said drops and having at least two bifunctional reactive points, generating free radicals by means of peroxide thermal decomposition, with control of the stoichiometry of styrene and crosslinking agent and of the evolution of reaction temperatures, the stoichiometric ratios of styrene double bonds to crosslinking agent double bonds ranging from 3 to 60 styrene double bonds per each crosslinker double bond in the original reacting mixture and the reaction temperatures being in ascending ramps between 65 °C and 250 °C.

3. The process of claim 2, wherein crosslinking agents are homopolymers and copolymers of isoprene, butadiene and other dienes.

4. The process according to any of the claims 2 or 3, wherein homopolymers and copolymers of isoprene, butadiene and other dienes include molecular structures in block, statistical (random) and intermediate versions, in a wide range of molecular weights, linear and branched structures, and mixtures of the same.

5. The process according to any of the claims 2, 3 or 4, wherein comonomers of isoprene, butadiene and other dienes are selected among styrene, alpha-methyl-styrene, acrylic and methacrylic comonomers, ethylene, propylene and acrylonitrile, including their different partially hydrogenated versions.

6. Low density synthetic proppants comprising nanocomposite microparticles of claim 1, wherein said proppants:

   a. have high Young's modulus values; and
   b. also have high admissible deformation values of more than 40%.

7. Fracture fluid for the unconventional extraction processes of oil and gas comprising the proppant of claim 1, wherein, besides comprising said proppant, it also comprises a polymeric viscosity modifier selected among Guar gum, Tara gum or Polyacrylonitriles; it may also comprise other proppants, crosslinker, friction reducers, antifoamers, corrosion inhibitors, scale inhibitors, kerosene inhibitors, clay stabilizers, biocides and chain breakers.

8. Synthetic nanocomposites in microparticle form formulated from polybutadienes, allowing great deformations before breaking, with applications in diverse fields of the industry, especially in the preparation of low density synthetic proppants to be used in unconventional extraction processes of oil and gas (fracking), in bearings for the slide of very heavy parts in the construction and mechanical industries, in torque reducers for the drilling of oil wells and other types of wells, wherein said nanocomposites are obtained by means of suspension copolymerization in an aqueous medium of styrene drops containing crosslinking agents dissolved in said drops and having at least two bifunctional reactive points, generating free radicals by means of peroxide thermal decomposition, with control of

the stoichiometry of styrene and the crosslinking agent and of the evolution of reaction temperatures, the stoichiometric ratios of styrene double bonds to crosslinking agent double bonds ranging from 3 to 60 styrene double bonds per each crosslinker double bond in the original reacting mixture, and the reaction temperatures being in ascending ramps between 65 °C and 250 °C.

**Amended claims under Art. 19.1 PCT**

1. Synthetic nanocomposites in microparticle form formulated from polybutadienes, and other polydienes, allowing great deformations before breaking, with applications in diverse fields of the industry, especially in the preparation of low density synthetic proppants to be used in unconventional extraction processes of oil and gas (fracking), in bearings for the slide of very heavy parts in the construction industry, in mechanics, in torque reducers for the drilling of oil wells and other types of wells, comprising said nanocomposite microparticles copolymers of a co-monomer and crosslinking agents **characterized in that**:

   said nanocomposites present glassy continuous structures in glassy phase form having a high crosslinks concentration and comprising an elastomeric phase with spacing between the phases by domains, said nanometric size phases being chemically linked,
   the crosslinking agents at least comprise a polydiene selected from diene homopolymers, diene compolymers, diene terpolymers and combinations thereof containing two double bonds per each 4 or 5 carbon atoms.

2. Process for the production of the microparticulated nanocomposites of claim 1, **characterized by** comprising: suspension copolymerization in an aqueous medium of styrene drops containing crosslinking agents dissolved in said drops and having at least two bifunctional reactive points, generating free radicals by means of peroxide thermal decomposition, with control of the stoichiometry of styrene and crosslinking agent and of the evolution of reaction temperatures, the stoichiometric ratios of styrene double bonds to crosslinking agent double bonds ranging from 3 to 60 styrene double bonds per each crosslinker double bond in the original reacting mixture and the reaction temperatures being in ascending ramps between 65 °C and 250 °C.

3. The process of claim 2, wherein crosslinking agents are selected from homopolymers and copolymers of isoprene, butadiene and other dienes as combinations thereof.

4. The process according to any of the claims 2 or 3, characterized because the homopolymers and copolymers of isoprene, butadiene and other dienes include molecular structures in block, as statistical and intermediate versions, in a wide range of molecular weights, linear and branched structures, and mixtures of the same.

5. The process according to any of the claims 2, 3 or 4, characterized because the comonomers of the crosslinking agents are selected from styrene, alpha-methyl-styrene, acrylic and methacrylic comonomers, ethylene, polypropylene and acrylonitrile, including their partially hydrogenated different versions and combinations thereof.

6. Low density synthetic proppants comprising he microparticulated nanocomposites of claim 1, **characterized in that**:

   a. have high Young's modulus values; and
   b. also have high admissible deformation values of more than 40%.

7. Fracture fluid for the unconventional extraction processes of oil and gas **characterized by** comprising the proppant of claim 1, and further comprising a polymeric viscosity modifier selected among Guar gum, Tara gum or Polyacrylonitriles.

8. Fracture fluid of claim 7, **characterized by** comprising other proppants, additional crosslinkers, friction reducers, antifoamers, emulsifiers, corrosion inhibitors, scale inhibitors, kerosene inhibitors, clay stabilizers, biocides and chain breakers.

9. Synthetic nanocomposites, characterized for being obtained by the process according to any of claims 2 to 5.

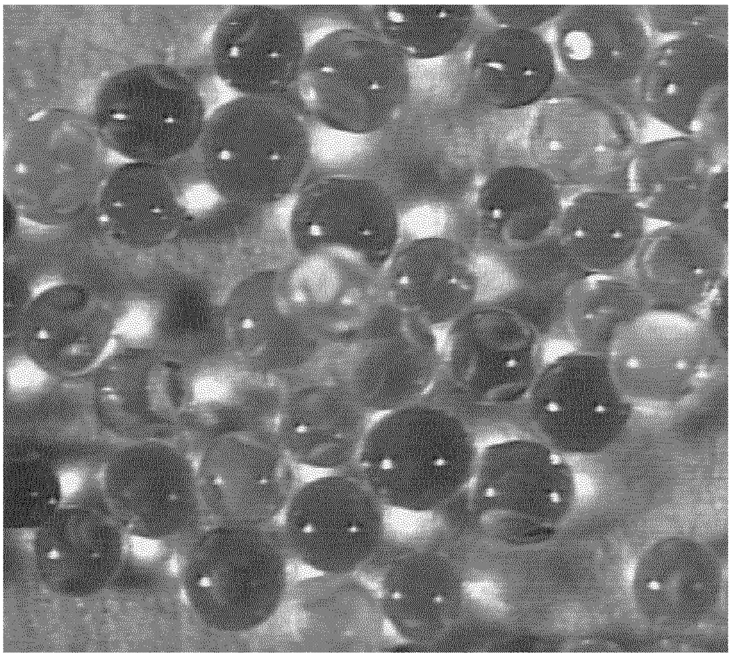

FIGURE 1

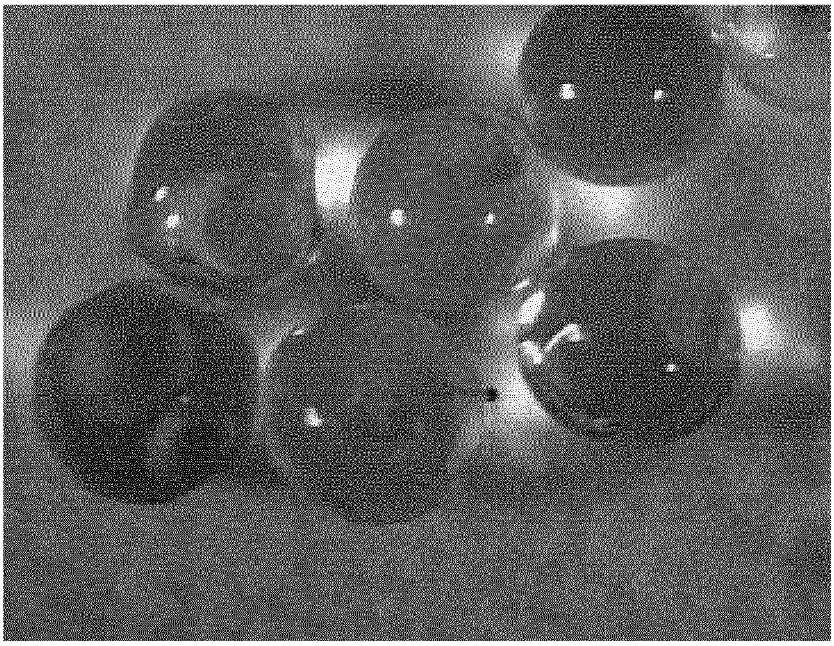

FIGURE 2

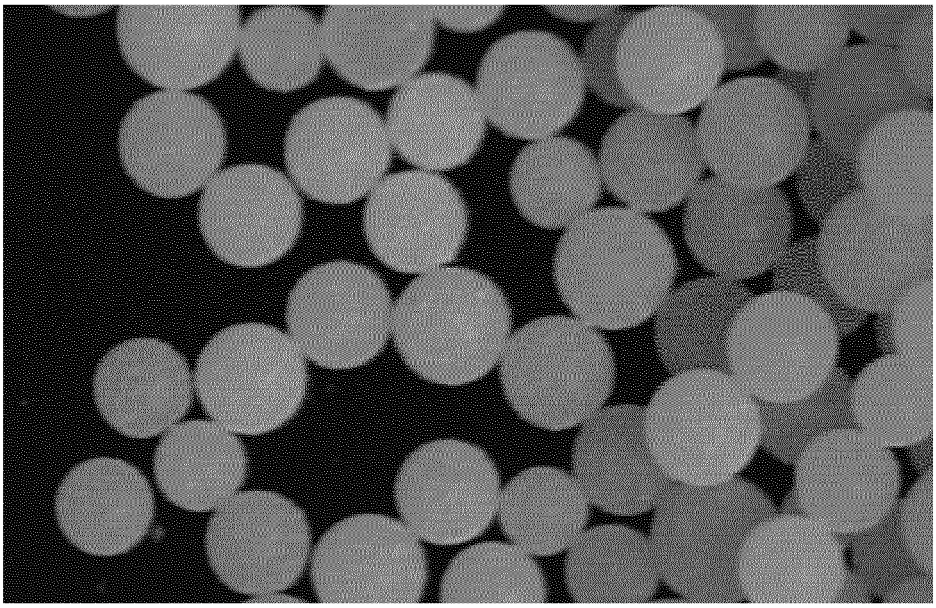

FIGURE 3

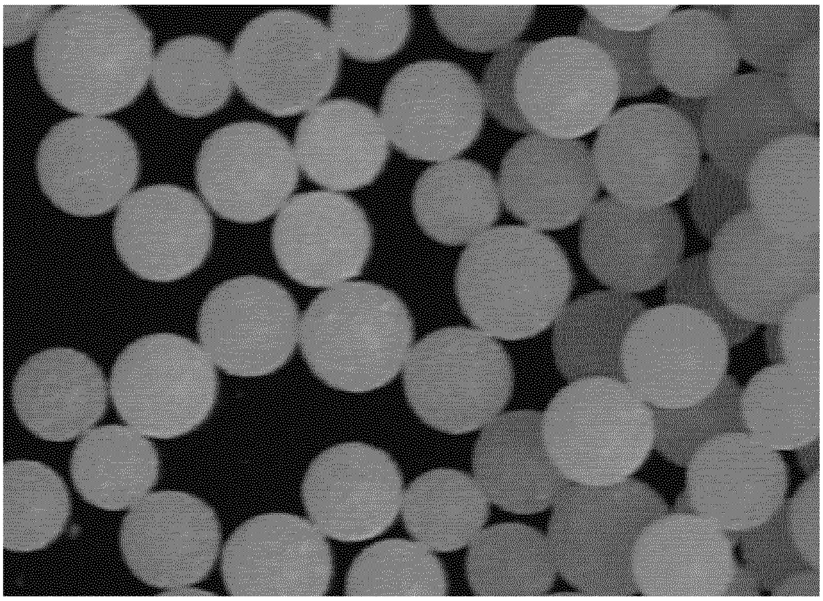

FIGURE 4

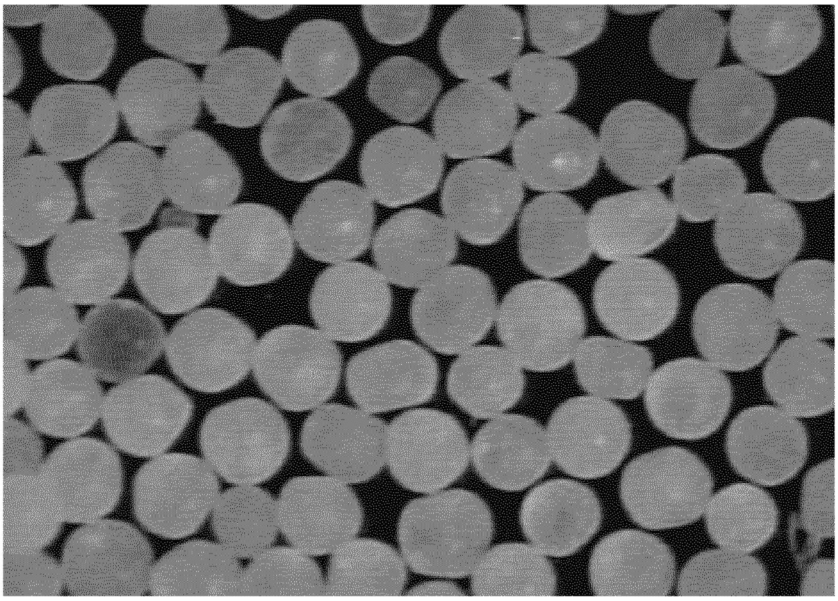

FIGURE 5

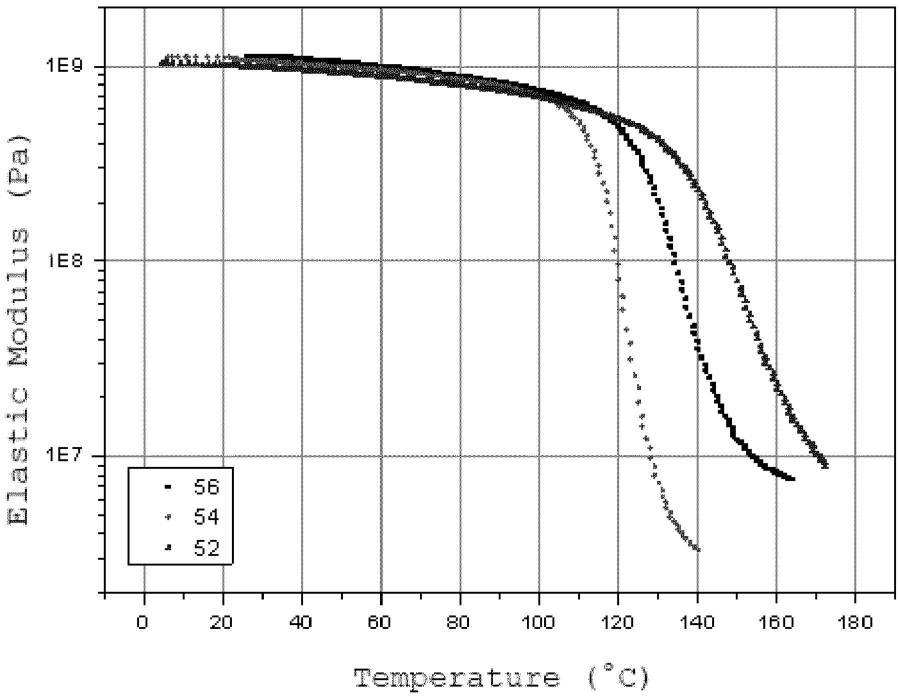


FIGURE 6

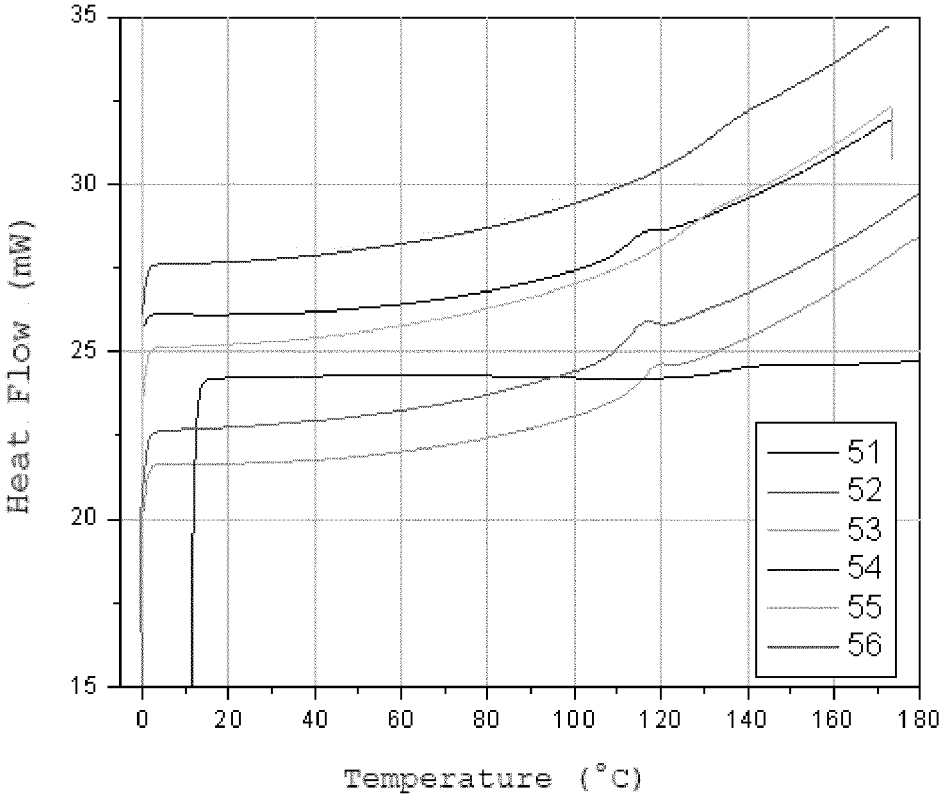
35
30
25
20
15
0
20
40
60
80
100
120
140
160
180
Heat Flow (mW)
Temperature (°C)
51
52
53
54
55
56

FIGURE 7

| INTERNATIONAL SEARCH REPORT | International application No. PCT/ES2015/070526 |
|---|---|

A. CLASSIFICATION OF SUBJECT MATTER

**See extra sheet**

According to International Patent Classification (IPC) or to both national classification and IPC

B. FIELDS SEARCHED

Minimum documentation searched (classification system followed by classification symbols)
C08F, C09K

Documentation searched other than minimum documentation to the extent that such documents are included in the fields searched

Electronic data base consulted during the international search (name of data base and, where practicable, search terms used)

EPODOC, INVENES, WPI, Base de datos de patentes de texto completo, XPESP, NPL, INSPEC, COMPENDX, HCAPLUS

C. DOCUMENTS CONSIDERED TO BE RELEVANT

| Category* | Citation of document, with indication, where appropriate, of the relevant passages | Relevant to claim No. |
|---|---|---|
| X | US 2012325474 A1 (BICERANO JOZEF) 27/12/2012, paragraphs [0034], [0055], [0058], [0059], [0069], [0075]-[0079], examples. | 1-8 |
| X | GB 1054301 A (DISTRENE L.) 11/01/1967, example. | 1-5, 8 |
| X | US 4233418 A (LINGIER WILLY F R ET AL.) 11/11/1980, examples. | 1-5, 8 |
| X | US 4282334 A (WALTER MANFRED ET AL.) 04/08/1981, examples. | 1-5, 8 |
| A | CA 2061357 A1 (SHELL CANADA LTD) 20/08/1992, the whole document. | 1-8 |

☐ Further documents are listed in the continuation of Box C. ☒ See patent family annex.

* Special categories of cited documents:
"A" document defining the general state of the art which is not considered to be of particular relevance.
"E" earlier document but published on or after the international filing date
"L" document which may throw doubts on priority claim(s) or which is cited to establish the publication date of another citation or other special reason (as specified)
"O" document referring to an oral disclosure use, exhibition, or other means.
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other documents , such combination being obvious to a person skilled in the art
"&" document member of the same patent family

| Date of the actual completion of the international search<br>29/10/2015 | Date of mailing of the international search report<br>**(30/10/2015)** |
|---|---|
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>M. Bautista Sanz<br><br>Telephone No. 91 3498553 |

Form PCT/ISA/210 (second sheet) (January 2015)

## INTERNATIONAL SEARCH REPORT

Information on patent family members

International application No.
PCT/ES2015/070526

| Patent document cited in the search report | Publication date | Patent family member(s) | Publication date |
|---|---|---|---|
| US2012325474 A1 | 27.12.2012 | US2015291873 A1 | 15.10.2015 |
| | | US2015011439 A1 | 08.01.2015 |
| | | US9034799 B2 | 19.05.2015 |
| | | US2013333889 A1 | 19.12.2013 |
| | | US2013225729 A1 | 29.08.2013 |
| | | US9006314 B2 | 14.04.2015 |
| | | US2013118741 A1 | 16.05.2013 |
| | | US2013096037 A1 | 18.04.2013 |
| | | US8466093 B2 | 18.06.2013 |
| | | US2013045901 A1 | 21.02.2013 |
| | | US8492316 B2 | 23.07.2013 |
| | | US8461087 B2 | 11.06.2013 |
| | | CA2784248 A1 | 06.07.2006 |
| | | CA2784248 C | 10.02.2015 |
| | | US2012202921 A1 | 09.08.2012 |
| | | US8278373 B2 | 02.10.2012 |
| | | US2012202719 A1 | 09.08.2012 |
| | | US8455403 B2 | 04.06.2013 |
| | | US2012199347 A1 | 09.08.2012 |
| | | US8361934 B2 | 29.01.2013 |
| | | EP2436749 A1 | 04.04.2012 |
| | | US2011105367 A1 | 05.05.2011 |
| | | US8088718 B2 | 03.01.2012 |
| | | US2010319916 A1 | 23.12.2010 |
| | | US7902125 B2 | 08.03.2011 |
| | | US2009305044 A1 | 10.12.2009 |
| | | US7803742 B2 | 28.09.2010 |
| | | US2009286698 A1 | 19.11.2009 |
| | | US7803741 B2 | 28.09.2010 |
| | | MX2007015844 A | 22.02.2008 |
| | | MX2007007914 A | 14.08.2007 |
| | | WO2008124080 A1 | 16.10.2008 |
| | | WO2006135892 A2 | 21.12.2006 |
| | | WO2006135892 A3 | 08.05.2008 |
| | | WO2006072069 A2 | 06.07.2006 |
| | | WO2006072069 A3 | 09.08.2007 |
| | | US2007181302 A1 | 09.08.2007 |
| | | US2007161515 A1 | 12.07.2007 |
| | | US8258083 B2 | 04.09.2012 |
| | | US2007021309 A1 | 25.01.2007 |
| | | US2007066491 A1 | 22.03.2007 |
| | | US7803740 B2 | 28.09.2010 |
| | | EP1904601 A2 | 02.04.2008 |
| | | EP1904601 A4 | 11.11.2009 |
| | | EP1838522 A2 | 03.10.2007 |
| | | EP1838522 A4 | 09.03.2011 |
| | | CA2565816 A1 | 13.12.2006 |
| | | CA2565816 C | 15.04.2014 |
| | | CA2563549 A1 | 06.07.2006 |
| | | CA2563549 C | 09.10.2012 |

Form PCT/ISA/210 (patent family annex) (January 2015)

## INTERNATIONAL SEARCH REPORT

International application No.

PCT/ES2015/070526

### CLASSIFICATION OF SUBJECT MATTER

***C08F2/18*** (2006.01)
***C08F212/08*** (2006.01)
***C08F10/08*** (2006.01)
***C09K8/80*** (2006.01)
***C09K8/62*** (2006.01)

Form PCT/ISA/210 (extra sheet) (January 2015)

## INTERNATIONAL SEARCH REPORT

Information on patent family members

International application No.
PCT/ES2015/070526

| Patent document cited in the search report | Publication date | Patent family member(s) | Publication date |
|---|---|---|---|
| GB1054301 A | 30.11.0002 | NONE | |
| US4233418 A | 11.11.1980 | JPS54157195 A | 11.12.1979 |
| | | IT1120754 B | 26.03.1986 |
| | | GB2022100 A | 12.12.1979 |
| | | GB2022100 B | 01.12.1982 |
| | | FR2427355 A1 | 28.12.1979 |
| | | DE2921571 A1 | 13.12.1979 |
| | | CA1121540 A | 06.04.1982 |
| | | BE876645 A1 | 17.09.1979 |
| | | AU4675579 A | 06.12.1979 |
| | | AU523366B B2 | 22.07.1982 |
| US4282334 A | 04.08.1981 | NL7703199 A | 03.10.1977 |
| | | JPS52117990 A | 03.10.1977 |
| | | JPS6057443 B2 | 14.12.1985 |
| | | IT1081354 B | 21.05.1985 |
| | | GR65690 B | 20.10.1980 |
| | | GB1576772 A | 15.10.1980 |
| | | FR2346381 A1 | 28.10.1977 |
| | | FR2346381 B1 | 03.06.1983 |
| | | ES457263 A1 | 01.02.1978 |
| | | DE2613352 A1 | 06.10.1977 |
| | | DE2613352 B2 | 07.08.1980 |
| | | CA1114984 A | 22.12.1981 |
| | | BE852793 A1 | 23.09.1977 |
| CA2061357 A1 | 20.08.1992 | US5103909 A | 14.04.1992 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6248838 B
- US 8278373 B
- US 5531274 A
- US 6059034 A
- US 6330916 B
- US 6451953 B
- US 7803740 B
- US 7902125 B
- US 8088718 B


### Non-patent literature cited in the description


- Statistics for Experimenters - Design, Innovation and Discovery. Box, Hunter & Hunter. Wiley-Interscience, 2005